# EUROPÄISCHE PATENTSCHRIFT

(11) **EP 3 820 747 B1**
(45) Veröffentlichungstag und Bekanntmachung des Hinweises auf die Patenterteilung: **23.08.2023**
(21) Anmeldenummer: 19735252.9
(22) Anmeldetag: 26.06.2019
(51) Int. Cl.: B60T 1/06

(54) **STEUERBARE AKTUATOREINRICHTUNG, BREMSVORRICHTUNG FÜR EIN ELEKTRISCH BETRIEBENES FAHRZEUG, UND VERFAHREN ZUM BETREIBEN EINER BREMSVORRICHTUNG**
CONTROLLABLE ACTUATOR ASSEMBLY, BRAKE SYSTEM FOR ELECTRIC VEHICLE AND METHOD OF ACTUATING A BRAKE SYSTEM
ENSEMBLE D'ACTIONNEUR COMMANDABLE, SYSTÈME DE FREIN POUR VÉHICULE ÉLECTRIQUE ET PROCÉDÉ DE COMMANDE D'UN SYSTÈME DE FREIN

(30) Priorität: 09.07.2018 DE 102018211298
(43) Veröffentlichungstag der Anmeldung: 19.05.2021
(73) Patentinhaber: Robert Bosch GmbH, 70442 Stuttgart (DE)
(72) Erfinder: FRIEDRICH, Thomas, 74379 Ingersheim (DE); HAISER, Heinz-Bernd, 71638 Ludwigsburg (DE)
(86) Internationale Anmeldenummer: PCT/EP2019/066988
(87) Internationale Veröffentlichungsnummer: WO 2020/011536

(56) Entgegenhaltungen:
- CN-A- 101 224 746
- CN-A- 107 054 316
- DE-A1-102007 019 441
- FR-A1- 2 841 317
- US-A1- 2013 268 171

## Beschreibung

Die vorliegende Erfindung betrifft eine steuerbare Aktuatoreinrichtung, eine Bremsvorrichtung für ein elektrisch betriebenes Fahrzeug, und ein Verfahren zum Betreiben einer Bremsvorrichtung.

### Stand der Technik

In Fahrzeugen mit Verbrennungsmotoren und mehreren Gängen sind üblicherweise Bremssysteme für eine Redundanz vorhanden, durch welche ein stromloses Halten erzielbar sein kann. Meist kommt hierbei eine Handbremse mit entsprechend wirkenden Aktuatoren oder automatische Parkbremsen (APB) zum Einsatz. Die Redundanz für die Bremswirkung kann hierbei durch das Einlegen eines Ganges, also über das Getriebe, erzielt werden. Andererseits ist es auch möglich, dass die Redundanz über eine Parksperre oder Sperrklinke in einem Automatikgetriebe erzielt werden kann.

Bei Elektrofahrzeugen mit einem Ein-Gang-Getriebe ist teilweise keine Parksperre oder Sperrklinke oder kein Aktuator für eine Redundanz beim Bremssystem oder Antriebsstrang vorhanden.

In der DE 102 34 848 A1 wird eine elektromechanische Bremsvorrichtung mit einer Feststelleinrichtung beschrieben. Die Bremsvorrichtung weist einen Freilauf auf und kann mit einer Sperrklinke versehen werden. US 2013/268171 A1 offenbart eine durch eine elektronische Steuereinheit gesteuerte elektromechanische Radbremse.

### Offenbarung der Erfindung

Die vorliegende Erfindung schafft eine Bremsvorrichtung für ein elektrisch betriebenes Fahrzeug nach Anspruch 1 und ein Verfahren zum Betreiben einer Bremsvorrichtung nach Anspruch 9.

Bevorzugte Weiterbildungen sind Gegenstand der Unteransprüche.

### Vorteile der Erfindung

Die der vorliegenden Erfindung zugrunde liegende Idee besteht darin, eine steuerbare Aktuatoreinrichtung, eine Bremsvorrichtung für ein elektrisch betriebenes Fahrzeug mit einer Aktuatoreinrichtung und ein Verfahren zum Betreiben einer Bremsvorrichtung für ein elektrisch betriebenes Fahrzeug anzugeben, wobei eine Redundanz in der Bremswirkung bei Elektrofahrzeugen erzielt werden kann, wobei eine Steuerung des Aktuators als redundante Bremskomponente über die Bordelektronik steuerbar ist.

Erfindungsgemäß umfasst die Bremsvorrichtung eine elektronische Anschlusseinrichtung, wobei die Aktuatoreinrichtung mit einer Antriebsachse eines elektrisch betriebenen Fahrzeugs verbindbar ist, wodurch eine Brems- oder eine Sperrwirkung für eine Drehbewegung der Antriebsachse erzeugbar ist, wobei die Aktuatoreinrichtung über die elektronische Anschlusseinrichtung von einer Steuereinrichtung steuerbar ist.

Die Bremsvorrichtung kann vorteilhaft in einem Elektrofahrzeug verbaut sein. Dadurch kann vorteilhaft eine Aktuatoreinrichtung, welche üblicherweise eine eigene Steuerung und eine dazu notwendige separate Busanbindung (beispielsweise einen CAN-Bus) aufweist, durch eine Aktuatoreinrichtung, welche direkt von einer Steuerung im Fahrzeug, beispielsweise von der Steuerung der Bremsanlage, gesteuert werden kann und keine spezielle BusAnbindung benötigt, ersetzt werden und Kosten verringert werden.

Hochautomatisierte Fahrzeuge mit solchen Aktuatoren, welche vorteilhaft ohne Fahrer unterwegs sind oder sogar selbst einparken können (etwa als Vallet parking), können eine volle Redundanz für Halte- oder Bremsmechanismen aufweisen und müssen sich vorteilhaft nicht allein auf die automatische Parkbremse verlassen.

Durch die Möglichkeit des Steuerns der Bremsvorrichtung durch eine Steuereinrichtung, welche sich vorteilhaft außerhalb oder abseits der Aktuatoreinrichtung befinden kann, kann die notwendige Hardware und Software zum Steuern der Aktuatoreinrichtung in einem geringeren Ausmaß ausfallen. Auf diese Weise können vorteilhaft Kosten verringert werden und ein robustes und redundantes Halten und/oder eine redundante Bremsvorrichtung erzielt werden, welche vorteilhaft eine Sperrklinke als verstellbaren und steuerbaren Aktuator umfassen kann.

Gemäß einer bevorzugten Ausführungsform der Bremsvorrichtung ist diese als eine Sperrklinke ausgeformt.

Die Verwendung einer Sperrklinke als Aktuator bietet vorteilhaft eine kostengünstige Möglichkeit einen steuerbaren Aktuator in einer Bremsvorrichtung zu verwirklichen.

Gemäß einer bevorzugten Ausführungsform der Bremsvorrichtung diese einen Elektromotor zum Akutieren der Sperrklinke.

Gemäß einer bevorzugten Ausführungsform der Bremsvorrichtung umfasst diese eine Klemme, mittels welcher ein Reibschluss mit der Antriebsachse herstellbar ist.

Gemäß einer bevorzugten Ausführungsform der Bremsvorrichtung umfasst diese einen Bolzen, mittels welchem ein Formschluss mit der Antriebsachse herstellbar ist.

Gemäß einer bevorzugten Ausführungsform der Bremsvorrichtung ist der Reibschluss und/oder der Formschluss mit einer Scheibe herstellbar, welche axial mit der Antriebsachse drehbar und mit dieser kraft- oder formschlüssig verbunden ist.

Bei der Scheibe kann es sich um eine Bremsscheibe handeln.

Erfindungsgemäß umfasst die Bremsvorrichtung für ein elektrisch betriebenes Fahrzeug eine erfindungsgemäße steuerbare Aktuatoreinrichtung; ein erstes Bremssystem, und eine Steuereinrichtung, welche mit der Aktuatoreinrichtung über die Anschlusseinrichtung verbindbar ist und mit dem ersten Bremssystem verbunden ist und die Aktuatoreinrichtung und das erste Bremssystem durch die Steuereinrichtung steuerbar sind.

Das Steuern der Aktuatoreinrichtung erfolgt vorteilhaft in einer bereits vorhandenen Steuereinrichtung des Fahrzeugs, und erfolgt vorteilhaft einfach nachdem die Anschlusseinrichtung, vorteilhaft als eine Schnittstelle ausgeformt, mit einer Signalleitung verbunden wurde. Das Steuern der Aktuatoreinrichtung vereinfacht und vergünstigt sich vorteilhaft, da die notwendige Schalt- und Steuerlogik sowie Hardwarekomponenten bereits in der Steuereinrichtung im Fahrzeug vorhanden sein kann. Die Steuereinrichtung ist vorteilhaft auch zur Steuerung der (hydraulischen) Bremsanlage eingerichtet und kann daher beispielsweise einen ASIL-D (automotive safety integrity level D) Standard (ISO 26262) oder entsprechende Hardware bereits umfassen und eine hohe funktionale Sicherheit für das Betätigen der Bremse und der Aktuatoreinrichtung gewährleisten. Auf eine Auslegung für eine solche Hardwarekomponente oder auf ein Bereitstellen einer solchen ASIL-D Standards in einer Steuereinrichtung in der Aktuatoreinrichtung selbst kann vorteilhaft verzichtet werden.

Das Ansteuern der Aktuatoreinrichtung erfolgt vorteilhaft hardverdrahtet, also über eine Signalleitung.

Durch die Verlagerung der Ansteuerungskomponenten in die Steuereinrichtung, welche ein Bremsanlagensteuergerät darstellen kann, und durch die Verbindung mit einer Signalleitung, können die Kosten für eine derartige Bremsvorrichtung vorteilhaft verringert werden.

Erfindungsgemäß umfasst die Bremsvorrichtung ein zweites Bremssystem, welches mit der Steuereinrichtung verbunden und durch diese steuerbar ist.

Gemäß einer bevorzugten Ausführungsform der Bremsvorrichtung umfasst das zweite Bremssystem eine automatische Parkbremse für zumindest ein Rad des elektrisch betriebenen Fahrzeugs.

Die automatische Parkbremse (APB) kann beispielsweise eine Motor-GetriebeEinheit umfassen. Diese kann zumindest auf beiden Bremssätteln an einer Achse, beispielsweise an der Hinterachse, des Fahrzeugs montiert sein. Die Steuereinrichtung kann vorteilhaft das zweite Bremssystem ansteuern, betätigen oder ausschalten. Hierbei kann die Steuereinrichtung eine Fahrstabilitätseinrichtung (ESP) umfassen, in welcher vorteilhaft ein ASIC (Anwendersoftware oder anwendungsorientierte integrierte Schaltung) für die Parkbremse vorhanden sein kann.

Gemäß einer bevorzugten Ausführungsform der Bremsvorrichtung umfasst das erste Bremssystem eine hydraulische Bremsanlage für zumindest ein Rad des elektrisch betriebenen Fahrzeugs.

Erfindungsgemäß erfolgt bei dem Verfahren zum Betreiben einer Bremsvorrichtung ein Bereitstellen einer erfindungsgemäßen Bremsvorrichtung; ein Aktivieren des ersten Bremssystems und/oder des zweiten Bremssystems durch ein Ansteuern mittels der Steuereinrichtung; und ein Aktivieren der steuerbaren Aktuatoreinrichtung und ein Erzeugen einer Brems- oder eine Sperrwirkung für eine Drehbewegung einer Antriebsachse eines elektrisch betriebenen Fahrzeugs durch ein Ansteuern mittels der Steuereinrichtung. Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand des in der schematischen Figur der Zeichnung angegebenen Ausführungsbeispiels näher erläutert.

Es zeigen:
- Fig. 1: eine schematische Darstellung der Bremsvorrichtung für ein elektrisch betriebenes Fahrzeug gemäß eines Ausführungsbeispiels der vorliegenden Erfindung mit einer steuerbaren Aktuatoreinrichtung gemäß eines Ausführungsbeispiels der vorliegenden Erfindung; und
- Fig. 2: eine Abfolge von Verfahrensschritten gemäß eines Ausführungsbeispiels des Verfahrens der vorliegenden Erfindung.

In den Figuren bezeichnen gleiche Bezugszeichen gleiche bzw. funktionsgleiche Elemente.

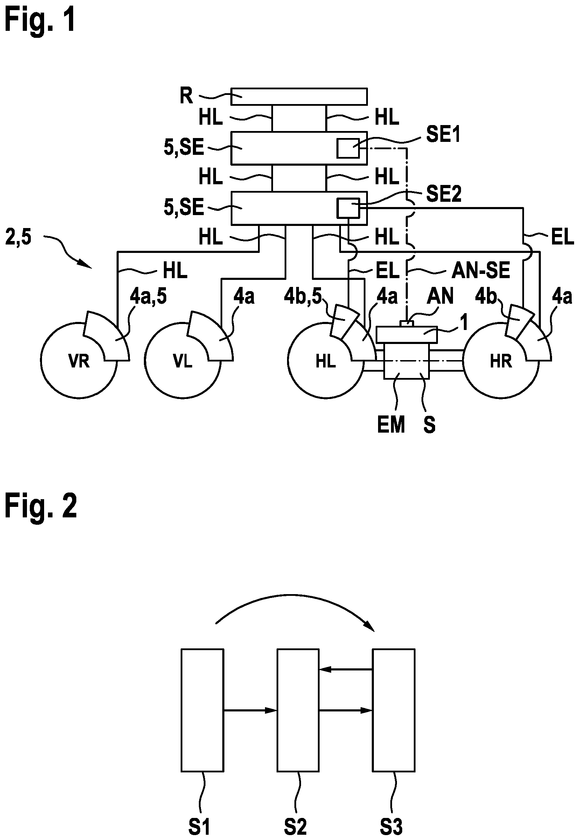

Fig. 1 zeigt eine schematische Darstellung der Bremsvorrichtung für ein elektrisch betriebenes Fahrzeug gemäß eines Ausführungsbeispiels der vorliegenden Erfindung mit einer steuerbaren Aktuatoreinrichtung gemäß eines Ausführungsbeispiels der vorliegenden Erfindung.

Die Bremsvorrichtung 5 für ein elektrisch betriebenes Fahrzeug 2 umfasst eine steuerbare Aktuatoreinrichtung 1; ein erstes Bremssystem 4a; und eine Steuereinrichtung SE, welche mit der Aktuatoreinrichtung 1 über die Anschlusseinrichtung AN verbindbar ist und mit dem ersten Bremssystem 4a verbunden ist und die Aktuatoreinrichtung 1 und das erste Bremssystem 4a durch die Steuereinrichtung SE steuerbar sind.

Die steuerbare Aktuatoreinrichtung umfasst eine elektronische Anschlusseinrichtung AN, welche mit einer Antriebsachse eines elektrisch betriebenen Fahrzeugs 2 verbindbar ist, wodurch eine Brems- oder eine Sperrwirkung für eine Drehbewegung der Antriebsachse erzeugbar ist, wobei die Aktuatoreinrichtung 1 über die elektronische Anschlusseinrichtung AN von einer Steuereinrichtung SE steuerbar ist. Weiterhin umfasst Bremsvorrichtung 5 ein zweites Bremssystem 4b, welches mit der Steuereinrichtung SE verbunden und durch diese steuerbar ist. Das zweite Bremssystem 4b kann eine automatische Parkbremse für zumindest eines der Räder VR; VL; HR; HL des elektrisch betriebenen Fahrzeugs 2 umfassen. Das erste Bremssystem 4a kann eine hydraulische Bremsanlage für zumindest ein Rad VR; VL; HR; HL des elektrisch betriebenen Fahrzeugs 2 umfassen.

Die Drehbewegung kann aus einer Bewegung, etwa einem Rollen oder Fahren, des Fahrzeugs resultieren. Bei der Anschlusseinrichtung AN kann es sich um eine Schnittstelle oder einen Stecker für eine Signalleitung handeln.

Das erste Bremssystem 4a und die Aktuatoreinrichtung oder das zweite Bremssystem 4b und die Aktuatoreinrichtung 1 oder alle drei zusammen stellen vorteilhaft eine redundante Bremsvorrichtung 5 dar. Hierbei können vorteilhaft bei einem Aktivieren eines Tasters für die automatische Parkbremse oder bei einem Haltebefehl aus einer automatischen Parkfunktion sowohl die Parkbremse, oder das zweite Bremssystem 4b, und die Aktuatoreinrichtung 1 aktiviert werden. Es kann vorteilhaft sowohl die Parkbremse sowie auch die Aktuatoreinrichtung einen Elektromotor, vorteilhaft einen leistungsarmen DC-Motor, umfassen, welcher vorteilhaft eine großen Untersetzung, beispielsweise größer 1 : 100 eine große Kraftwirkung, etwa eine Klemmkraft, erzielen kann. Daraus kann eine verhältnismäßig lange Sperrzeit von beispielsweise einer Sekunde erzielt werden, ähnlich bei der Parkbremse. Die Sperrzeit ist die Zeit, die für die Aktuierung notwendig ist, also zwischen Aktuierungsbefehl und blockiertem Rad/Achse.

Die Steuereinrichtung SE kann vorteilhaft einen ersten Kanal mit einer ersten Steuereinrichtung SE1 für das erste Bremssystem 4a umfassen. Das erste Bremssystem kann als hydraulische Bremsanlage mit einem Reservior R verbunden sein, über welches eine Hydraulik bedient werden kann, beispielsweise mit Öl. Die erste Steuereinrichtung SE1 kann vorteilhaft auch die Aktuatoreinrichtung 1 über die Schnittstelle AN steuern und mit dieser über ein Kabel AN-SE verbunden sein. Das Kabel AN-SE kann vorteilhaft auf 12 V ausgelegt sein. Die hydraulische Bremsanlage kann vorteilhaft an jedem Rad einen Bremssattel oder andere Bremskomponenten umfassen. Die elektrische Antriebsachse kann mit einer elektrischen Maschine EM als ein Bauelement, vorteilhaft als eine integrierte Antriebsachse, vorteilhaft an der Hinterachse, ausgeformt sein. Die Aktuatoreinrichtung 1 ist vorteilhaft auf dieser elektrischen Achse angeordnet oder in diese integriert. Die Steuereinrichtung umfasst vorteilhaft eine zweite Steuereinrichtung SE2. Die erste und die zweite Steuereinrichtung SE1 und SE2 können als Teilkomponenten einer Steuereinrichtung SE gebildet sein, oder zwei eigenständige Steuereinrichtungen sein. Die zweite Steuereinrichtung SE2 ist vorteilhaft zur Steuerung des zweiten Bremssystems 4b eingerichtet, und kann ebenso wie die erste Steuereinrichtung SE1 über einen ASIC (Application Specific Integrated Circuit) verfügen. Die zweite Steuereinrichtung SE2 kann die automatische Parkbremse steuern, welche beispielsweise an den Bremssätteln des ersten Bremssystems, etwa auf die gleichen Scheiben S wirkend, vorteilhaft nur an einer Achse (etwa an der Hinterachse), angeordnet sein kann. Die Bezeichnungen HL und HR meinen vorteilhaft die Räder Hinten Links und Hinten Rechts, die Bezeichnungen VL und VR die Räder Vorne Links und Vorne Rechts. Das zweite Bremssystem 4b kann mit einer elektrischen Leitung EL mit der zweiten Steuereinrichtung SE2 verbunden sein. Diese kann vorteilhaft auf 12 V ausgelegt sein.

Die Bremsvorrichtung 5 kann vorteilhaft in hochautomatisierten Elektrofahrzeugen zum Einsatz kommen.

Die Aktuatoreinrichtung 1 kann als Sperrklinke vorteilhaft einen Reibschluss mit der Antriebsachse herstellen, etwa Klemmen umfassen. Die Funktion der Sperrklinke ist vorteilhaft mit der der APB vergleichbar. Durch eine größere Untersetzung kann die Scheibe innerhalb der elektrischen Achse kleiner gestaltet werden, was den Zusatzbauraum und das Zusatzgewicht reduzieren kann. Daher kann sich der Vorteil ergeben, dass durch den Reibschluss die Sperrklinke für eine Notverzögerung aus kleinen bis mittleren Geschwindigkeiten eingesetzt werden (Limitierung durch Thermik) kann. Die Sperrklinke kann vorteilhaft auch einen Formschluss herstellen, etwa mittels Bewegen eines Bolzens (axial oder radial) zur Arretierung der mit der Antriebsachse verbundenen Scheibe S. Daher kann sich der Vorteil ergeben, dass noch günstigere Realisierungsmöglichkeit erzielt werden können, da die Klemmkraft über den Formschluss gehalten werden kann. Die Scheibe S, vorteilhaft eine Bremsscheibe, ist in der Fig. 1 aus Gründen der Übersichtlichkeit nicht eingezeichnet, kann jedoch auch innerhalb der elektrischen Achse (EM) angeordnet sein, so dass die Bremssysteme 4a, 4b und die Aktuatoreinrichtung 1 darauf wirken können.

Das Reservoir R kann mit hydraulischen Leitungen HL mit dem ersten Bremssystem 4a verbunden sein, vorteilhaft auch mit der Steuereinrichtung SE.

In der Fig. 1 wird eine schematische Verbindung des Reservoirs R mit den Rädern und deren ersten Bremssystem 4a und zweiten Bremssystem 4b über hydraulische Leitungen HL gezeigt. Die hydraulischen Leitungen HL verlaufen in der Fig. 1 unter der Steuereinrichtung SE (beide Blöcke), vorteilhaft jedoch nicht durch diese hindurch. Die erste Steuerungseinrichtung SE1 kann mit einem ersten Bordnetzkanal verbunden sein und die zweite Steuerungseinrichtung SE2 kann mit einem zweiten Bordnetzkanal verbunden sein.

Fig. 2 zeigt eine Abfolge von Verfahrensschritten gemäß eines Ausführungsbeispiels des Verfahrens der vorliegenden Erfindung.

Bei dem Verfahren zum Betreiben einer Bremsvorrichtung erfolgt ein Bereitstellen S1 einer erfindungsgemäßen Bremsvorrichtung; ein Aktivieren S2 des ersten Bremssystems und/oder des zweiten Bremssystems durch ein Ansteuern mittels der Steuereinrichtung; und ein Aktivieren S3 der steuerbaren Aktuatoreinrichtung und ein Erzeugen einer Brems- oder eine Sperrwirkung für eine Drehbewegung einer Antriebsachse eines elektrisch betriebenen Fahrzeugs durch ein Ansteuern mittels der Steuereinrichtung.

Dabei ist es möglich, dass zuerst der Verfahrensschritt S3 erfolgt, also ein Aktivieren der steuerbaren Aktuatoreinrichtung und ein Erzeugen einer Brems- oder eine Sperrwirkung, und erst danach der Verfahrensschritt S2 erfolgt, also das Aktivieren des ersten Bremssystems und/oder des zweiten Bremssystems durch ein Ansteuern mittels der Steuereinrichtung.

## Patentansprüche

1. Bremsvorrichtung (5) für ein elektrisch betriebenes Fahrzeug (2) umfassend;
- eine steuerbare Aktuatoreinrichtung (1) mit einer elektronischen Anschlusseinrichtung (AN), wobei die Aktuatoreinrichtung (1) mit einer Antriebsachse eines elektrisch betriebenen Fahrzeugs (2) verbindbar ist, wodurch eine Brems- oder eine Sperrwirkung für eine Drehbewegung der Antriebsachse erzeugbar ist;
- ein erstes Bremssystem (4a),
- ein zweites Bremssystem (4b) und
- eine Steuereinrichtung (SE), welche mit der Aktuatoreinrichtung (1) über die Anschlusseinrichtung (AN) verbindbar ist und mit dem ersten Bremssystem (4a) und mit dem zweiten Bremssystem (4b) verbunden ist und die Aktuatoreinrichtung (1) und das erste Bremssystem (4a) und das zweite Bremssystem (4b) durch die Steuereinrichtung (SE) steuerbar sind.

2. Bremsvorrichtung (5) nach Anspruch 1, bei der die steuerbare Aktuatoreinrichtung (1) als eine Sperrklinke ausgeformt ist.

3. Bremsvorrichtung (5) nach Anspruch 2, bei der die steuerbare Aktuatoreinrichtung (1) einen Elektromotor zum Aktuieren der Sperrklinke umfasst.

4. Bremsvorrichtung (5) nach einem der Ansprüche 1 bis 3, bei der die steuerbare Aktuatoreinrichtung (1) eine Klemme umfasst, mittels welcher ein Reibschluss mit der Antriebsachse herstellbar ist.

5. Bremsvorrichtung (5) nach einem der Ansprüche 1 bis 4, bei der die steuerbare Aktuatoreinrichtung (1) einen Bolzen umfasst, mittels welchem ein Formschluss mit der Antriebsachse herstellbar ist.

6. Bremsvorrichtung (5) nach Anspruch 4 oder 5, bei welcher , der Reibschluss und/oder Formschluss bei der steuerbaren Aktuatoreinrichtung (1) mit einer Scheibe (S) herstellbar ist, welche axial mit der Antriebsachse drehbar und mit dieser kraft- oder formschlüssig verbunden ist.

7. Bremsvorrichtung (5) einem der Ansprüche 1 bis 6, wobei das zweite Bremssystem (4b) eine automatische Parkbremse für zumindest ein Rad (VR; VL; HR; HL) des elektrisch betriebenen Fahrzeugs (2) umfasst.

8. Bremsvorrichtung (5) nach einem der Anspruch 1 bis 7, wobei das erste Bremssystem (4a) eine hydraulische Bremsanlage für zumindest ein Rad (VR; VL; HR; HL) des elektrisch betriebenen Fahrzeugs (2) umfasst.

9. Verfahren zum Betreiben einer Bremsvorrichtung (5) umfassend die Schritte:
- Bereitstellen (S1) einer Bremsvorrichtung (5) nach einem der Ansprüche 1 bis 8;
- Aktivieren (S2) des ersten Bremssystems (4a) und/oder eines zweiten Bremssystems (4b) durch ein Ansteuern mittels der Steuereinrichtung (SE); und
- Aktivieren (S3) der steuerbaren Aktuatoreinrichtung (1) und Erzeugen einer Brems- oder eine Sperrwirkung für eine Drehbewegung einer Antriebsachse eines elektrisch betriebenen Fahrzeugs (2) durch ein Ansteuern mittels der Steuereinrichtung (SE).

## Claims

1. Brake device (5) for an electrically operated vehicle (2) comprising:
- a controllable actuator device (1) with an electronic connection device (AN), wherein the actuator device (1) can be connected to a drive axle of an electrically operated vehicle (2), by means of which a braking effect or a locking effect for a rotational movement of the drive axle can be produced;
- a first brake system (4a),
- a second brake system (4b) and
- a control device (SE) which can be connected to the actuator device (1) via the connection device (AN) and which is connected to the first brake system (4a) and the second brake system (4b), and the actuator device (1) and the first brake system (4a) and the second brake system (4b) can be controlled by the control device (SE).

2. Brake device (5) according to Claim 1, in which the controllable actuator device (1) is formed as a locking pawl.

3. Brake device (5) according to Claim 2, in which the controllable actuator device (1) comprises an electric motor for actuating the locking pawl.

4. Brake device (5) according to one of Claims 1 to 3, in which the controllable actuator device (1) comprises a clamp, by means of which a frictional connection to the drive axle can be produced.

5. Brake device (5) according to one of Claims 1 to 4, in which the controllable actuator device (1) comprises a bolt, by means of which a form-fitting connection to the drive axle can be produced.

6. Brake device (5) according to Claim 4 or 5, in which the frictional connection and/or form-fitting connection in the controllable actuator device (1) can be produced with a disc (S) which is rotatably axially connected to the drive axle and is connected to the latter in a force-fitting or form-fitting manner.

7. Brake device (5) according to one of Claims 1 to 6, wherein the second brake system (4b) comprises an automatic parking brake for at least one wheel (FR; FL; RR; RL) of the electrically operated vehicle (2).

8. Brake device (5) according to one of Claims 1 to 7, wherein the first brake system (4a) comprises a hydraulic brake unit for at least one wheel (FR; FL; RR; RL) of the electrically operated vehicle (2).

9. Method for operating a brake device (5), comprising the steps:
- providing (S1) a brake device (5) according to one of Claims 1 to 8;
- activating (S2) the first brake system (4a) and/or a second brake system (4b) by an activation by means of the control device (SE); and
- activating (S3) the controllable actuator device (1) and producing a braking effect or a locking effect for a rotational movement of a drive axle of an electrically operated vehicle (2) by an activation by means of the control device (SE).

## Revendications

1. Dispositif de freinage (5) pour un véhicule à propulsion électrique (2) comprenant :
- un dispositif d'actionnement (1) commandable comportant un dispositif de connexion (AN) électronique, dans lequel le dispositif d'actionnement (1) peut être relié à un essieu moteur d'un véhicule à propulsion électrique (2), ce qui permet de générer un effet de freinage ou de blocage d'un mouvement de rotation de l'essieu moteur ;
- un premier système de freinage (4a),
- un deuxième système de freinage (4b) et
- un dispositif de commande (SE) qui peut être relié au dispositif d'actionnement (1) par le biais du dispositif de connexion (AN) et qui est relié au premier système de freinage (4a) et au deuxième système de freinage (4b), et le dispositif d'actionnement (1) et le premier système de freinage (4a) et le deuxième système de freinage (4b) peuvent être commandés par le biais du dispositif de commande (SE).

2. Dispositif de freinage (5) selon la revendication 1, dans lequel le dispositif d'actionnement (1) commandable est réalisé sous la forme d'un cliquet d'arrêt.

3. Dispositif de freinage (5) selon la revendication 2, dans lequel le dispositif d'actionnement (1) commandable comprend un moteur électrique destiné à actionner le cliquet d'arrêt.

4. Dispositif de freinage (5) selon l'une des revendications 1 à 3, dans lequel le dispositif d'actionnement (1) commandable comprend une pince au moyen de laquelle une liaison par frottement peut être établie avec l'essieu moteur.

5. Dispositif de freinage (5) selon l'une des revendications 1 à 4, dans lequel le dispositif d'actionnement (1) commandable comprend un goujon au moyen duquel une liaison par complémentarité de forme avec l'essieu moteur peut être établie.

6. Dispositif de freinage (5) selon la revendication 4 ou 5, dans lequel la liaison par frottement et/ou la liaison par complémentarité de forme peut être établie dans le dispositif d'actionnement (1) commandable au moyen d'un disque (S) qui peut tourner axialement avec l'essieu moteur et qui est relié à celui-ci par complémentarité de force ou de forme.

7. Dispositif de freinage (5) selon l'une des revendications 1 à 6, dans lequel le deuxième système de freinage (4b) comprend un frein de stationnement automatique pour au moins une roue (VR ; VL ; HR ; HL) du véhicule à propulsion électrique (2).

8. Dispositif de freinage (5) selon l'une des revendications 1 à 7, dans lequel le premier système de freinage (4a) comprend un système de freinage hydraulique pour au moins une roue (VR ; VL ; HR ; HL) du véhicule à propulsion électrique (2).

9. Procédé de fonctionnement d'un dispositif de freinage (5) comprenant les étapes suivantes :
- la fourniture (S1) d'un dispositif de freinage (5) selon l'une des revendications 1 à 8 ;
- l'activation (S2) du premier système de freinage (4a) et/ou d'un deuxième système de freinage (4b) par le biais d'une commande au moyen du dispositif de commande (SE) ; et
- l'activation (S3) du dispositif d'actionnement (1) commandable et la production d'un effet de freinage ou de blocage d'un mouvement de rotation d'un essieu moteur d'un véhicule (2) à propulsion électrique par le biais d'une commande au moyen du dispositif de commande (SE).
